# EUROPEAN PATENT APPLICATION

(11) **EP 1 758 296 A1**
(43) Date of publication of application: **28.02.2007**
(21) Application number: 06007276.6
(22) Date of filing: 06.04.2006
(51) Int. Cl.: H04L 12/00, H01Q 1/24, H01Q 5/00, H01Q 21/28

(54) **Intenna of wireless terminal**

(30) Priority: 23.08.2005 KR 20050077344
(71) Applicant: Samsung Electronics Co., Ltd., Suwon-si, Gyeonggi-Do (KR)
(72) Inventor: Lee, Jae-Ho, c/o Samsung Electronics Co., Ltd., Suwon-si, Gyeonggi-do (KR); Seo, Jeong-Ah, c/o Samsung Electronics Co., Ltd., Suwon-si, Gyeonggi-do (KR)
(74) Representative: Lang, Johannes

(57) **Abstract**

An intenna of a wireless terminal including at least one intenna for transmission/reception of wireless communication signals, and an intenna for reception of digital broadcast signals. Also an intenna of a wireless terminal, which includes at least one intenna for both transmission/reception of wireless communication signals and reception of digital broadcast signals, and an intenna for reception of the digital broadcast signals. Further, an intenna of a wireless terminal, which includes an intenna for both transmission/reception of wireless communication signals and reception of digital broadcast signals. Furthermore, an intenna of a wireless terminal, which includes at least one intenna for both transmission/reception of wireless communication signals and reception of digital broadcast signals, and at least one intenna for transmission/reception of the wireless communication signals.

## Description

### BACKGROUND OF THE INVENTION

### 1. Field of the Invention

The present invention relates to an internal antenna or "intenna" of a wireless terminal, and more particularly to an intenna of a wireless terminal, which provides an intenna for reception of digital broadcast signals or an intenna for wireless communication signals and digital broadcast signals.

### 2. Description of the Related Art

A wireless terminal includes an antenna for transmitting/receiving wireless communication signals. Usually, such an antenna is an external antenna provided outside of a wireless terminal. In addition, an intenna which may be installed inside of a wireless terminal has been provided. The intenna is installed inside of the wireless terminal, thereby reducing the available package space of the wireless terminal.

Currently, a wireless terminal includes a separate antenna for receiving digital broadcast signals for a Digital Multimedia Broadcasting (DMB) as well as general wireless communication signals. However, because the separate antenna for reception of the digital broadcast signals is an external antenna provided outside of a wireless terminal, the separate antenna adds to the package space of the wireless terminal.

### SUMMARY OF THE INVENTION

Accordingly, the present invention has been made to solve the above-mentioned problems occurring in the prior art, and it is an object of the present invention to provide an intenna of a wireless terminal for reception of digital broadcast signals.

It is another object of the present invention to provide an intenna of a wireless terminal for transmission/reception of wireless communication signals and reception of digital broadcast signals.

In accordance with one aspect of the present invention, there is provided an intenna of a wireless terminal, the intenna including at least one intenna for transmission/reception of wireless communication signals; and an intenna for reception of digital broadcast signals.

In accordance with another aspect of the present invention, there is provided an intenna of a wireless terminal, the intenna including at least one intenna for both transmission/reception of wireless communication signals and reception of digital broadcast signals; and an intenna for reception of the digital broadcast signals.

In accordance with further another aspect of the present invention, there is provided an intenna of a wireless terminal, the intenna including an intenna for both transmission/reception of wireless communication signals and reception of digital broadcast signals.

In accordance with another aspect of the present invention, there is provided an intenna of a wireless terminal, the intenna including at least one intenna for both transmission/reception of wireless communication signals and reception of digital broadcast signals; and at least one intenna for transmission/reception of the wireless communication signals.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram illustrating the construction of a wireless terminal including an intenna according to a first embodiment of the present invention; and
FIG. 2 is a block diagram illustrating the construction of a wireless terminal including an intenna according to a second embodiment of the present invention.

### DETAILED DESCRIPTION OF THE PREFERRED EMBODIMENT

Preferred embodiments of the present invention will be described in detail herein below with reference to the accompanying drawings. The same reference numerals are used to designate the same elements as those shown in other drawings.

An intenna according to the present invention may include both an intenna for transmission/reception of wireless communication signals and an intenna for receiving digital broadcast signals. Further, an intenna according to the present invention may include an intenna for transmission/reception of wireless communication signals and reception of digital broadcast signals. Furthermore, an intenna according to the present invention may include an intenna for both transmission/reception of wireless communication signals and reception of digital broadcast signals, and an intenna for receiving the digital broadcast signals.

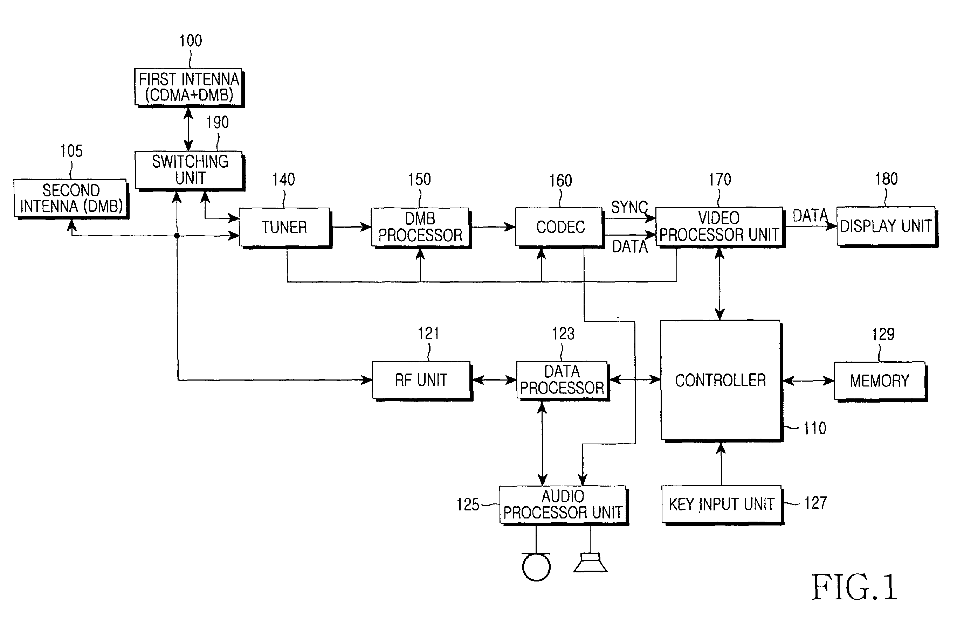

FIG. 1 is a block diagram illustrating the construction of a wireless terminal including an intenna according to a first embodiment of the present invention. FIG. 1 which shows the construction of the wireless terminal including an intenna for both transmission/reception of wireless communication signals and reception of digital broadcast signals, and an intenna solely for receiving the digital broadcast signals. The wireless communication signals represent Code Division Multiple Access (CDMA) communication signals, Personal Communication System (PCS) communication signals and Global System for Mobile (GSM) communication signals. In the embodiment of the present invention, it is assumed that the wireless communication signals represent CDMA communication signals.

Referring to FIG. 1, a first intenna 100 receives CDMA communication signals and applies the received CDMA communication signals to a switching unit 190 according to the embodiment of the present invention. The first intenna 100 applies digital broadcast signals (DMB signals) to the switching unit 190 . The second intenna 105 represents an intenna for receiving DMB signals, which applies the received DMB signals to a tuner 140.

A Radio Frequency (RF) unit 121 performs wireless communication of the wireless terminal. The RF unit 121 includes an RF transmitter for up-converting and amplifying the frequency of transmitted signals, an RF receiver for low-noise amplifying received signals and down-converting the frequency of the received signals, etc. According to the embodiment of the present invention, the RF unit 121 transmits signals to the first intenna 100 through the switching unit 190, and receives wireless communication signals, which are received in the first intenna 100, through the switching unit 190.

A data processor 123 includes a transmitter for coding and modulating the transmitted signals, and a receiver for demodulating and decoding the received signals, etc. That is, the data processor 123 may include a modem and a codec. An audio processor unit 125 reproduces reception audio signals output from the data processor 123 or transmits transmission audio signals generated from a microphone to the data processor 123.

A key input unit 127 includes keys for inputting number and character information and function keys for setting various functions. The key input unit 127 includes various mode setup keys for processing DMB signals.

A memory 129 may include a program memory and a data memory. The program memory may store programs for controlling general operations of the wireless terminal, and programs for processing DMB signals. The memory 129 temporarily stores data generated during the execution of the programs.

The controller 110 performs a function of controlling the general operations of the wireless terminal, which may also include the data processor 123. When the wireless terminal is in a communication mode, the controller 110 controls the switching unit 190 to switch signals received in the first intenna 100 to the RF unit 121, thereby allowing the RF unit 121 to perform a wireless communication function. When the wireless terminal is in a DMB mode, the controller 110 controls the switching unit 190 to switch DMB signals received in the first intenna 100 and the second intenna 105 to the tuner 140, thereby allowing the tuner 140 to receive the DMB signals.

The tuner 140 receives DMB signals selected under the control of the controller 110, and converts the frequency of the received DMB signals. A DMB processor 150 demodulates and decodes the DMB signals output from the tuner 140.

A codec 160 decodes audio signals and image signals, which are separately received in the DMB processor 150, into Moving Pictures Experts Group (MPEG) signals, outputs the decoded audio signals to the audio processor unit 125, and outputs the decoded image signals to an video processor unit 170.

The video processor unit 170 processes both the image signals output from the codec 160 and user data output from the controller 110, and outputs the processed signals and data to a corresponding area of a display unit 180. The display unit 180 displays data output from the controller 110 in the communication mode, and displays DMB image data and user data output from the video processor unit 170 in the DMB mode to corresponding areas, respectively.

The intenna according to the present invention may also be installed in and used for a three mode wireless terminal which can receive a CDMA communication service, a PCS communication service and a GSM communication service, as well as the wireless terminal which performs transmission/reception of the wireless communication signals and reception of the DMB signals as illustrated in FIG. 1. The intenna according to the present invention, which may be installed in the three mode wireless terminal for receiving DMB signals, may include two intennas for transmission/reception of wireless communication signals, one intenna for transmission/reception of wireless communication signals, and an intenna for reception of digital broadcast signals. Further, the intenna according to the present invention may include two intennas for both transmission/reception of wireless communication signals and reception of digital broadcast signals, and an intenna for transmission/reception of wireless communication signals. Furthermore, the intenna according to the present invention may include two intennas for transmission/reception of wireless communication signals, and an intenna for both transmission/reception of wireless communication signals and reception of digital broadcast signals. Moreover, the intenna according to the present invention may include three intennas for both transmission/reception of wireless communication signals and reception of digital broadcast signals, and an intenna for reception of digital broadcast signals.

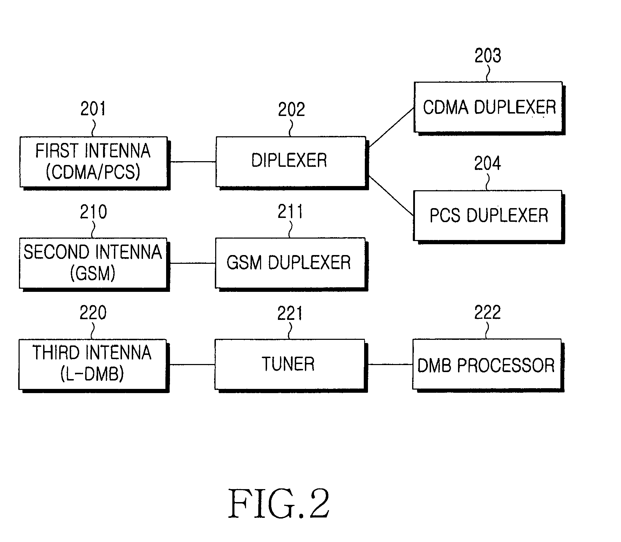

FIG. 2 is a block diagram illustrating the construction of a wireless terminal including an intenna according to a second embodiment of the present invention. FIG. 2 shows the construction of a three mode wireless terminal which includes an intenna having an intenna for CDMA and PCS communication, an intenna for GSM communication, and an intenna for reception of DMB signals. The DMB signals represent satellite DMB signals, L-band terrestrial DMB signals, and band-□ terrestrial DMB signals. In the embodiment of the present invention, it is assumed that the DMB signals represent L-band terrestrial DMB signals with a frequency band of 1452 ~ 1492 MHz.

Referring to FIG. 2, a first intenna (CDMA/PCS) 201 receives CDMA or PCS communication signals, and applies the received CDMA or PCS communication signals to a diplexer 202.

The diplexer 202 separates the received frequency band signals. If the communication signals received in the diplexer 202 have a frequency band of 824 ~ 894 MHz, the diplexer 202 applies the received communication signals to a CDMA duplexer 203. Further, if the communication signals received in the diplexer 202 have a frequency band of 1851 ~ 1989 MHz, the diplexer 202 applies the received communication signals to a PCS duplexer 204.

A second intenna (GSM) 210 receives GSM communication signals, and applies the received GSM communication signals to a GSM duplexer 211.

A third intenna (L-DMB) 220 receives L-DMB signals with a frequency band of 1452 ~ 1492 MHz, and transmits the received L-DMB signals to a tuner 221. The tuner 221 converts the frequency of the received L-DMB signals, and a DMB processor 222 demodulates and decodes DMB signals output from the tuner 221.

As described above, the present invention provides a wireless terminal with an intenna for receiving digital broadcast signals or an intenna for receiving both wireless communication signals and digital broadcast signals, thereby reducing the intenna package space of the wireless terminal.

Although a preferred embodiment of the present invention has been described for illustrative purposes, those skilled in the art will appreciate that various modifications, additions and substitutions are possible, without departing from the scope and spirit of the invention as disclosed in the accompanying claims, including the full scope of equivalents thereof.

## Claims

1. An intenna of a wireless terminal, the intenna comprising:
at least one intenna for transmission/reception of wireless communication signals; and
an intenna for reception of digital broadcast signals.

2. The intenna as claimed in claim 1, further comprising an intenna for transmission/reception of the wireless communication signals.

3. The intenna as claimed in claim 1, wherein the wireless communication signals represent CDMA communication signals, PCS communication signals, and GSM communication signals, which use a mobile communication network.

4. The intenna as claimed in claim 1, wherein the digital broadcast signals represent satellite digital broadcast signals, L-band terrestrial digital broadcast signals, and band-□ terrestrial digital broadcast signals.

5. An intenna of a wireless terminal, the intenna comprising:
at least one intenna for both transmission/reception of wireless communication signals and reception of digital broadcast signals; and
an intenna for reception of the digital broadcast signals.

6. The intenna as claimed in claim 5, wherein the wireless communication signals represent CDMA communication signals, PCS communication signals, and GSM communication signals, which use a mobile communication network.

7. The intenna as claimed in claim 5, wherein the digital broadcast signals represent satellite digital broadcast signals, L-band terrestrial digital broadcast signals, and band-□ terrestrial digital broadcast signals.

8. An intenna of a wireless terminal, the intenna comprising an intenna for both transmission/reception of wireless communication signals and reception of digital broadcast signals.

9. The intenna as claimed in claim 8, wherein the wireless communication signals represent CDMA communication signals, PCS communication signals, and GSM communication signals, which use a mobile communication network.

10. The intenna as claimed in claim 8, wherein the digital broadcast signals represent satellite digital broadcast signals, L-band terrestrial digital broadcast signals, and band-□ terrestrial digital broadcast signals.

11. An intenna of a wireless terminal, the intenna comprising:
at least one intenna for both transmission/reception of wireless communication signals and reception of digital broadcast signals; and
at least one intenna for transmission/reception of the wireless communication signals.

12. The intenna as claimed in claim 11, wherein the wireless communication signals represent CDMA communication signals, PCS communication signals, and GSM communication signals, which use a mobile communication network.

13. The intenna as claimed in one of claims 11, wherein the digital broadcast signals represent satellite digital broadcast signals, L-band terrestrial digital broadcast signals, and band-□ terrestrial digital broadcast signals.
